# EUROPEAN PATENT APPLICATION

(11) **EP 0 731 469 A2**
(43) Date of publication of application: **11.09.1996**
(21) Application number: 96102680.4
(22) Date of filing: 22.02.1996
(51) Int. Cl.: G11B 27/32, G11B 27/10, H04N 5/92, G11B 27/34

(54) **Video information recording and reproduction apparatus and method as well as video tape**

(30) Priority: 10.03.1995 JP 50886/95
(71) Applicant: HITACHI, LTD., Chiyoda-ku, Tokyo 101 (JP)
(72) Inventor: Morishima, Kenta, Kodaira-shi, Tokyo 187 (JP); Hamamoto, Nobuo, Nishitama-gun, Tokyo 190-01 (JP); Mizuishi, Kenichi, Hachiouji-shi, Tokyo 192-03 (JP); Ohtake, Masatoshi, Oume-shi, Tokyo 198 (JP); Tsunoda, Yoshito, Tokyo 167 (JP); Nagata, Minoru, Kodaira-shi, Tokyo 187 (JP); Doi, Yasunori, Kokubunji-shi, Tokyo 185 (JP)
(74) Representative: Strehl Schübel-Hopf Groening & Partner

(57) **Abstract**

The video information recording and reproduction apparatus comprises a video information recording and reproduction section for recording and reproducing video picture information onto and from a video tape, and an index picture production section which includes a picture memory for storing compressed index picture information, and a microcomputer for extracting the video picture information recorded by the video information recording and reproduction section at designated extraction timings, successively compressing, decoding and storing the extracted video picture information into the picture memory, successively reading out, decompressing and decoding the compressed index picture information stored in the picture memory to form still pictures and outputting the still pictures, and which supplies the index still picture information successively outputted from the microcomputer to the video information recording and reproduction section so that the index still picture information may be successively recorded into a top portion of the video tape by the video information recording and reproduction section, as well as a video information recording and reproduction method and a video tape.

## Description

### Background of the Invention

This invention relates to a video information recording and reproduction apparatus such as a video tape recorder (VTR) or a video tape recorder with a camera (movie), and more particularly to a video information recording and reproduction apparatus and method by which, in order to grasp contents of video information recorded on a video tape in a short time, a series of index pictures of the video information can be produced along a time series and recorded onto the video tape as well as a video tape on which such index pictures are recorded.

Conventionally, various index systems have been proposed for retrieving the contents and the position of video information recorded on a tape using a video information recording and reproduction apparatus of the type which employs a video tape as represented by a video tape recorder (VTR).

A first one of prior art index systems is disclosed in Japanese Patent Laid-Open Application No. Hei 6-153130. In the first prior art index system, video information recorded on a tape is sampled at predetermined timings to produce index pictures, and the index pictures are successively stored into a storage means different from the tape. Upon utilization of the index pictures, either the index pictures for the entire tape are read out from the storage means and displayed in the form of a table, or a reproduction position of the tape is designated from a scale indicating a recording range of the tape to read out and display a corresponding index picture on a display screen so that the contents or a retrieval condition of the tape may be grasped intuitively by eyesight.

With the first prior art index system, however, storage means for storing index pictures is required other than a tape, and storage means for index pictures corresponding to individual tapes to be produced are required. Thus, as such storage means other than a tape, use of a hard disk or an EEPROM (electrically erasable and programmable ROM) annexed to a tape is proposed in the first prior art document. However, where an external recording medium such as a hard disk is used, the reproduction processing therefor depends upon an apparatus used for reproduction, and other apparatus cannot display index pictures and require reproduction of index pictures. Meanwhile, the additional provision of a storage medium for index pictures to a tape raises the cost required for the tape. Further, whichever means is adopted, index pictures produced by the first prior art index system cannot be utilized by a video information recording and reproduction apparatus of the type which is not compatible with the index system.

A second prior art index system is disclosed in Japanese Patent Laid-Open Application No. Sho 64-66888. In the second prior art index system, a tape has an index area set at a top portion thereof for recording index information (absolute addresses, image information) useful for retrieval of the tape. In order to fetch a picture to be recorded into the index area from a tape recorded in advance, if position information of an arbitrary one scene is designated, then the tape is fed fast to the position, and then the picture at the position is reproduced, whereafter the thus reproduced image information is stored once into a memory present outside the tape. Thereafter, the tape is fed back to the top thereof, and the picture written in the memory is recorded for each screen into the predetermined index area at the top of the tape. Then, upon reproduction of the index, information for one field from the predetermined index area is reproduced via the memory. Also a multiple-divided screen is disclosed in the second prior art document.

With the picture index production and displaying system of the second prior art index system, however, picture information for a screen of one field, that is, picture information only for 1/60 second in the NTSC (National Television System Committee) (one of standard television systems; 30 frames with 525 scanning lines are used for one second) mode, is recorded into the index area of a tape. Upon reproduction of the picture, the picture information is recorded once into a picture memory outside the tape and then reproduced by normal picture reproduction so that it is outputted as a TV picture. Since a memory outside the tape is required upon reproduction of a picture recorded in the index area in this manner, the picture index production and displaying system is disadvantageous in that the picture in the index area cannot be reproduced only by an ordinary VTR placed on the market.

Further, since an index picture is designated while a reproduced picture is visually observed after it is recorded onto a tape to produce the index, rewinding and recording of the tape are required for each one index picture. In this instance, if it is assumed that, for example, a reference picture is cut out after each one minute from contents for 120 minutes to produce an index, then a fast feeding and rewinding operation of the tape must be performed by 120 times. This corresponds, as a travel distance of the tape, to fast feeding and rewinding operations of a 120-minute tape from the top to the last end by 60 times. Therefore, it has been proposed to thin out pictures to decrease the number of times. However, even where the proposal is adopted, the tape must still be moved by 13 times. Although the time required when designation of a reference picture is performed manually increases as much, the time required for production of an index is still long and the load applied to a mechanism section of the VTR is still heavy even if designation of a reference picture is performed automatically after each fixed interval of time. Further, the VTR disclosed in the second prior art document must have a mechanism which can designate, both upon recording and reproduction of an index, data recorded on the tape in units of a field and record and reproduce the thus designated data. Consequently, the second prior art index system is disadvantageous in that much time is required for production of an index picture and a high load is applied to the mechanism section, and the mechanism section must have a special construction. The second prior art index system is disadvantageous also in that, in order to display an index picture, the index picture must be fetched once into a memory.

In this manner, for the utilization of an index picture, a video information recording and reproduction apparatus for exclusive use is required, and there is a subject to be solved in that index data cannot be used on an ordinary video deck.

### Summary of the Invention

It is an object of the present invention to provide a video information recording and reproduction apparatus and a method of recording index picture information onto a video tape by which, in order to solve the subject of the prior art described above, even if a video tap is set in position into an ordinary video deck and reproduced in an ordinary reproduction mode, index picture information which allows contents of video information recorded on the video tape thus set to be retrieved at a glance can be recorded onto the video tape.

It is another object of the present invention to provide a video information recording and reproduction apparatus with an index picture production and recording function by which an index picture can be automatically produced in a short time and recorded onto a video tape with a simple construction.

It is a further object of the present invention to provide a video information recording and reproduction apparatus with an index picture production and recording function by which, even when new video information is recorded additionally or in a superposed condition onto a video tape on which video information is recorded already, an index picture corresponding to the new video information can be automatically produced in a short time and recorded onto the video tape.

It is a still further object of the present invention to provide a video information recording and reproduction apparatus with an index picture production and recording function which can be connected to a video camera.

It is a yet further object of the present invention to provide a video tape which allows, even when it is set in position into an ordinary video deck and reproduced in an ordinary reproduction mode, contents of video information recorded on the video tape thus set to be retrieved at a glance.

In order to attain the objects described above, the present invention provides a video information recording and reproduction apparatus, characterized in that it comprises video information recording and reproduction means for recording and reproducing video picture information onto and from a video tape, and an index picture production section which includes a picture memory for storing compressed index picture information, and a microcomputer for extracting the video picture information recorded by the video information recording and reproduction means at designated extraction timings, successively compressing, decoding and storing the extracted video picture information into the picture memory, successively reading out, decompressing and decoding the compressed index picture information stored in the picture memory to form still pictures and outputting the still pictures, and which supplies the index still picture information successively outputted from the microcomputer to the video information recording and reproduction means so that the index still picture information may be successively recorded into a top portion of the video tape by the video information recording and reproduction means.

Further, the present invention provides a video information recording and reproduction apparatus, characterized in that it comprises video information recording and reproduction means for recording and reproducing video picture information onto and from a video tape, and an index picture production section which includes storage means (a picture memory) for storing compressed index picture information and recording setting conditions, and a microcomputer for extracting the video picture information recorded by the video information recording and reproduction means at designated extraction timings, successively compressing, decoding and storing the extracted video picture information into the storage means, storing the recording setting conditions obtained from the video information recording and reproduction means into the storage means, successively reading out, decompressing and decoding the compressed index picture information stored in the storage means to form still pictures, adding the recording setting conditions from the storage means to the still pictures and outputting the still pictures together with the recording setting conditions, and which supplies the index still picture information successively outputted from the microcomputer having the recording setting conditions added thereto to the video information recording and reproduction means so that the index still picture information with the recording setting conditions added thereto may be successively recorded into a top portion of the video tape by the video information recording and reproduction means.

Furthermore, the present invention provides a video information recording and reproduction apparatus, constructed such that it comprises an external apparatus such as a video tuner or a camera, video information recording and reproduction means and an index picture production section, and that one of a picture input signal obtained from the video tuner or the external apparatus and a reproduced picture signal obtained from the video information recording and reproduction means by reproduction is selectively inputted to the index picture production section, and the picture input signal obtained from the video tuner or the external apparatus and the index picture signal outputted from the index picture production section are inputted to the video information recording and reproduction means so as to be recorded onto the video tape.

The index picture production section includes a frame memory for storing divided screen data for forming a divided screen obtained decompression decoding and editing of picture data for one frame, a picture memory for storing data for forming a plurality of compressed coded divided screens, and a microcomputer for performing compression coding processing, decoding processing and editing processing.

The apparatus constructed in such a manner as described above operates in the following modes to form index pictures on a video tape. The modes include a recording mode in which a picture input signal (video picture information) obtained from the video tuner or the external apparatus is recorded onto a video tape, an index storage mode in which a predetermined one of screens to be recorded is sampled out and stored into the picture memory of the index picture production section, an index reproduction mode in which the index picture data of the picture memory of the index picture production section are recorded onto the video data again, and a reproduction mode in which the picture signal recorded on the video tape is outputted.

Further, the present invention provides a video information recording and reproduction apparatus, characterized in that it comprises video information recording and reproduction means for recording and reproducing video picture information onto and from a video tape, and index picture production means which includes storage means for storing compressed index picture information, and a microcomputer for extracting the video information recorded by the video information recording and reproduction means at designated extraction timings, successively compressing, decoding and storing the extracted video picture information into the storage means, successively reading out the compressed index picture information stored in the storage means, converting the read out compressed index picture information into information of a form wherein a plurality of reduced index screens are arranged per one screen and successively outputting the information obtained by the conversion as still pictures each continuously for a predetermined period of time, and which supplies the plurality of arranged index still pictures outputted successively from the microcomputer each for the predetermined period of time to the video information recording and reproduction means so as to be successively recorded into a top portion of the video tape by the video information recording and reproduction means.

Further, the present invention provides a video information recording and reproduction apparatus, characterized in that it comprises video information recording and reproduction means for recording and reproducing video picture information onto and from a video tape, and index picture production means which includes storage means for storing compressed index picture information, and a microcomputer for extracting the video information recorded by the video information recording and reproduction means at designated extraction timings, successively storing the extracted video information into a frame memory, successively compressing, decoding and storing the video picture information stored in the frame memory into the storage means, converting the compressed index picture information stored in the storage means into information of a form wherein a plurality of reduced index screens are arranged per one screen and successively storing the information obtained by the conversion as still pictures into the frame memory, and which successively outputs the plurality of thus arranged index still pictures stored in the frame memory each for a predetermined period of time to the video information recording and reproduction means so as to be successively recorded into a top portion of the video tape by the video information recording and reproduction means each continuously for the predetermined period of time.

Further, according to the present invention, the video information recording and reproduction apparatus is characterized in that it further comprises display means for individually displaying the plurality of arranged index still pictures recorded at the top portion of the video tape and reproduced by the video information recording and reproduction means, and control means for designating a desired one of the plurality of arranged index still pictures displayed on the display means and feeding the video tape to a position at which the video information corresponding to the designated index picture is recorded.

Further, according to the present invention, the video information recording and reproduction apparatus is characterized in that it further comprises display means for individually displaying the plurality of arranged index still pictures recorded at the top portion of the video tape and obtained by reproduction in a recording mode by the video information recording and reproduction means, and control means for designating a desired one of the plurality of arranged index still pictures obtained by reproduction of the top portion of the video tape in a recording mode and displayed on the display means, feeding the video tape to a position at which the video information corresponding to the designated index picture is recorded to record the new video information onto the video tape and inputting the new video information to the index picture production means.

Further, the present invention provides a method of recording index picture information onto a video tape, characterized in that index picture information to be used for retrieving video information recorded on a video tape is recorded, into a top portion of the video tape, as information of a plurality of arranged pictures wherein each screen includes, upon reproduction, a plurality of screens of information sampled in a time series at desired timings from the video information and reduced later.

Further, the present invention is characterized in that an address on a tape when an index picture is extracted is stored in an associated condition with the index picture into a picture memory of index picture production means, and when the index picture is recorded onto a video tape using the index picture production means, the address of the index picture on the tape is recorded onto a control track.

Further, the present invention is characterized in that pictures reproduced by a tape recorder body can be extracted in a time series at predetermined extraction timings by index picture production means and stored into a picture memory.

Further, the present invention is characterized in that an index picture to be reproduced and an extraction address of the index picture recorded on a control track can be stored into picture storage means.

Further, the present invention is characterized in that means for storing, when a picture to be reproduced is extracted at a predetermined extraction timing and stored by picture compression coding means, also an address on a tape at the extraction timing is provided, and when an index picture is recorded, an address is stored onto a control track.

Further, the present invention is characterized in that a video camera is used as a video information recording and reproduction apparatus.

Further, the present invention is characterized in that recording setting conditions such as a recording date, a recording channel, a recording time and so forth obtained via a VTR microcomputer are stored into a picture memory of an index picture production section, and the index picture production section adds the recording setting conditions and at least one picture signifying contents to be recorded to produce and output an index so as to be recorded as index information onto a video tape.

As described above, according to the present invention, since a video tape on which video information is recorded in a time series and which has a top portion at which index picture information extracted in a time series from the video information is recorded as a plurality of screens in each of which a plurality of screens are arranged can be prepared, if the video tape is set in position into an ordinary apparatus (video information recording and reproduction apparatus or video information reproduction apparatus) having at least a reproduction function and is reproduced in an ordinary reproduction mode, then the index pictures recorded at the top portion of the video tape can be displayed for a period of time of approximately 3 seconds on display means provided for the apparatus so as to allow selection by eyesight, and as a result, video information desired to be enjoyed can be retrieved readily from among the index pictures displayed on the display means.

In other words, when it is tried to search video information desired to be enjoyed from among a large number of video tapes, if a video information reproduction apparatus having at least a reproduction function is available, the video information can be searched out readily using the video information reproduction apparatus, and the video information desired to be enjoyed can be designated and reproduced without an error.

### Brief Description of the Drawings

FIG. 1 is a block diagram showing an embodiment of a video tape recorder according to the present invention;
FIG. 2 is a flow chart illustrating index picture recording mode processing;
FIG. 3 is a flow chart illustrating index picture reproduction mode processing;
FIGS. 4 and 5 are flow charts illustrating superposed imaging recording processing;
FIG. 6 is a diagrammatic view showing an example of a display of index pictures;
FIG. 7 is a schematic view of a tape and a memory upon the index picture recording mode processing;
FIG. 8 is a similar view but showing the tape and the memory upon the index picture reproduction mode processing;
FIG. 9 is a similar view but showing the tape and the memory upon the superposed imaging recording mode processing;
FIG. 10 is a block diagram of a video camera to which the present invention is applied;
FIG. 11 is a schematic view showing a superimposed index picture;
FIG. 12 is a schematic view showing another example of a display of index pictures;
FIG. 13 is a block diagram showing the embodiment of the video tape recorder according to the present invention similar to FIG. 1; and
FIG. 14 is a block diagram showing a detailed functional construction of an index picture formation section shown in FIGS. 1 and 13.

### Detailed Description of the Preferred Embodiments

Several embodiments of the present invention are described below with reference to the accompanying drawings.

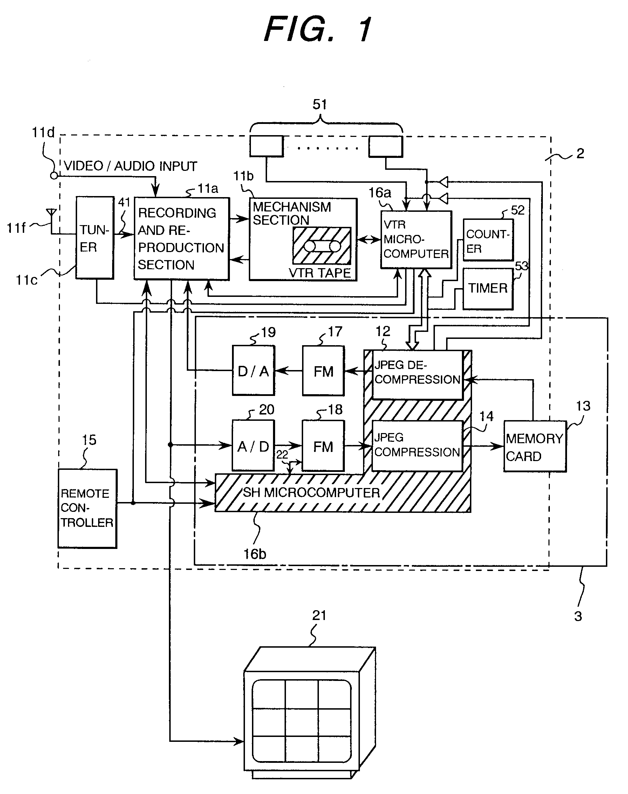

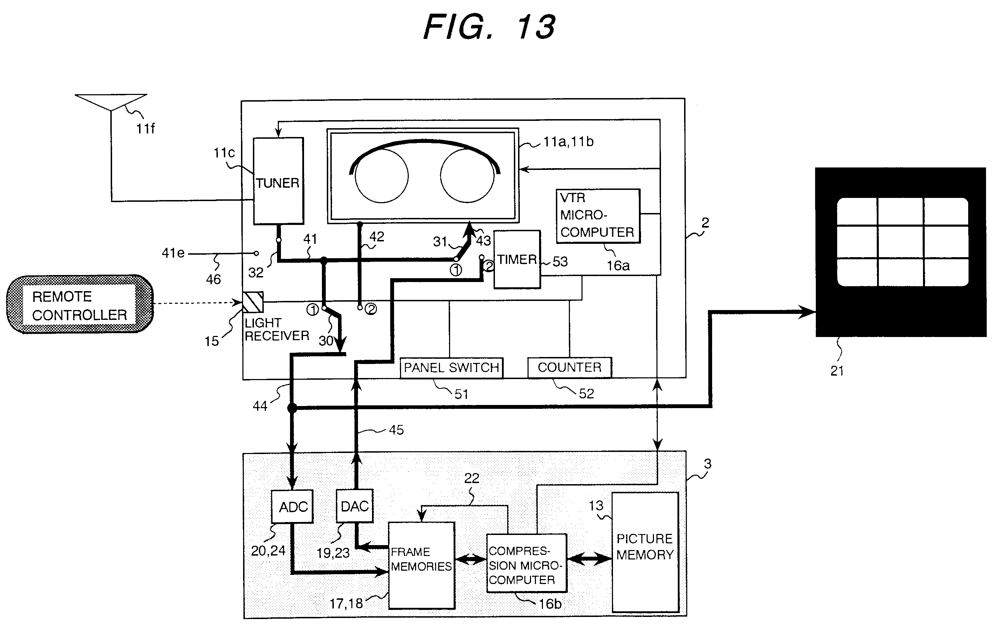

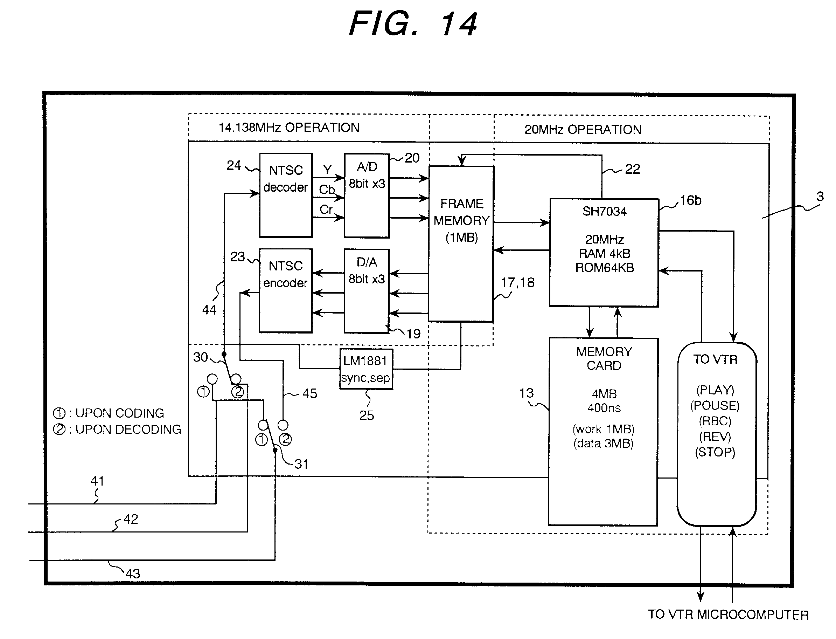

FIGS. 1 and 13 show a construction of an embodiment of a video information recording and reproduction apparatus (video tape recorder) according to the present invention. FIG. 14 is a block diagram showing a detailed functional construction of an index picture production section 3.

A recording and reproduction section 11a, a mechanism section 11b and a VTR microcomputer 16a construct a construction section 2 of an ordinary video tape recorder. A video information signal, for example, from an antenna 11f via a tuner 11c or an external apparatus (for example, a camera) 11e is inputted to the recording and reproduction section 11a. Further, a video-audio signal is inputted from a video-audio input terminal 11d to the recording and reproduction section 11a. Upon recording, the video information signal or the video-audio signal is transmitted to the mechanism section 11b, by which it is recorded onto a video tape. Further, when necessary, the video information signal or the video-audio signal is outputted so that it is displayed on a monitor 21. Also a remote controller 15 and a microcomputer 16 basically are ordinary components of an ordinary video tape recorder. However, control means for the entire apparatus (system) is formed from the VTR microcomputer 16a and an index picture producing microcomputer 16b. For the index picture producing microcomputer 16b of the index picture production section 3 according to the present invention, it is desirable to use a microcomputer of a high performance which can perform compression coding and decompression decoding of picture data in order to produce and record an index picture. A JPEG (Joint Photographic Coding Experts Group) compression coder 14 and a JPEG decompression decoder 12 which are shown included in the index picture producing microcomputer 16b shown in FIGS. 1 and 13 are a software coder and a software decoder for compression coding and decompression decoding of digital picture data, and using the JPEG compression coder 14 and the JPEG decompression decoder 12, production of an index picture and recording of the index picture into an index area IDX secured at a top portion of a video tape according to the present invention are performed. While the software code and the software decoder are formed, in the embodiment described above, from the VTR microcomputer 16a and the index picture producing microcomputer 16b, respectively, apparently they may otherwise be formed from a single high performance microcomputer. Further, the JPEG denotes a coding system for a color still picture.

In particular, as shown in FIGS. 1 and 13, production and storage of an index picture according to the present invention are performed through a path which includes a decoder 24 (shown in FIG. 14), an analog to digital converter 20, a frame memory (FM) 18, the JPEG compression software coder 14 and a memory card 13. Thus, an analog video signal inputted from the tuner 11c or the external apparatus 11e and obtained from the recording and reproduction section 11a is separated into a brightness signal (Y) and a pair of color difference signals (Cb, Cr) by the decoder 24. The video signals thus obtained are converted into digital video signals by the analog to digital converter 20, and picture data for one screen successively obtained by sampling the digital video signals obtained by the conversion with a sampling signal 22 obtained, for example, after each 30 seconds from the index picture producing microcomputer 16b are fetched into the frame memory 18 in response to a vertical synchronizing signal from a synchronism separator 25. Then, the picture data (for example, 752*240) for one screen successively fetched into the frame memory 18 are thinned out (sampled) by the JPEG compression software coder 14 of the index picture producing microcomputer 16b to reduce the size of the picture, for example, to 1/4 (for example, 376*240). The resulted data are further compressed and coded. The thus compressed coded index pictures for the individual screens are successively stored into the memory card (picture memory) 13. On the contrary, recording of index pictures onto a video tape according to the present invention is performed via a path which includes the memory card 13, the JPEG decompression software decoder 12, a frame memory (FM) 17, a digital to analog (D/A) converter 19 and a decoder 23 (shown in FIG. 14). In particular, compressed coded index pictures for individual screens stored in the memory card 13 are read out and then decompressed and decoded to a size of, for example, a nine-divided screen (for example, 235*150) by the JPEG decompression software decoder 12 of the index picture producing microcomputer 16b. The thus decompressed decoded pictures for individual screens are stored in an orderly arranged condition into the frame memory 17. The index pictures for the individual pictures stored and arranged in the frame memory 17 are read out and converted into analog video signals by the digital to analog converter 19. Then, the analog video signals are converted into a composite analog video signal, and index signals for one screen formed from nine divided screens are successively supplied to the recording and reproduction section 11a. A pair of switches 30 and 31 for switching signals shown in FIG. 13 may be formed from electronic circuits or may be formed by software. The switches 30 and 31 may be provided in the index picture production section 3 as seen in FIG. 14. A further switch 32 is provided for the switching between the tuner 11c and the external apparatus 11e (for example, a camera).

According to the present invention, video information supplied from the recording and reproduction section 11a to the mechanism section 11b to be recorded onto a tape is sampled in parallel at timings defined by the microcomputer 16 (for example, after each 30 seconds), converted by the analog to digital converter 20 and fetched into the frame memory 18. The video signal for one frame is compressed and coded by the JPEG compression software coder 14 installed in the microcomputer 16. The coded information is stored into the memory card 13. The memory card 13 may be formed from an IC memory card, for example, of a card size which has a comparatively small capacity since, even if an index picture is produced after each 30 seconds with a two-hour recording tape which is used for an ordinary video tape recorder as hereinafter described, it is required that the IC memory card can store information of 240 band-compressed index pictures.

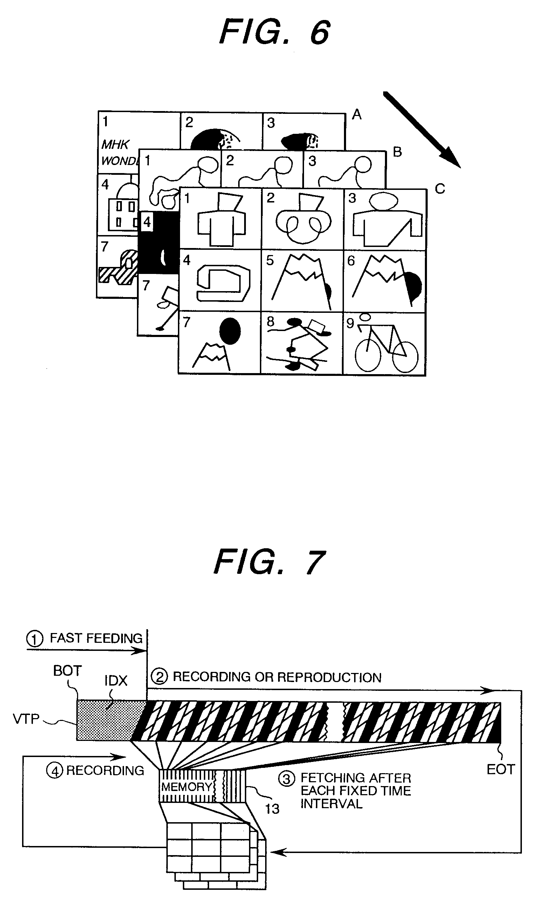

The index picture information recorded in the memory card 13 is decompressed, upon recording onto a tape, by the JPEG decompression software decoder 12 and written into the frame memory 17. In this instance, the index pictures are edited and produced so that, for example, 3 x 3 = 9 index pictures can be displayed for each of screens A, B and C as shown in FIG. 6. The index pictures thus edited and produced are converted from digital to analog pictures by the analog to digital converter 20 and transmitted as a video information signal to the recording and reproduction section 11a. The video information signal is further sent to the mechanism section 11b, by which it is recorded onto a tape VTP.

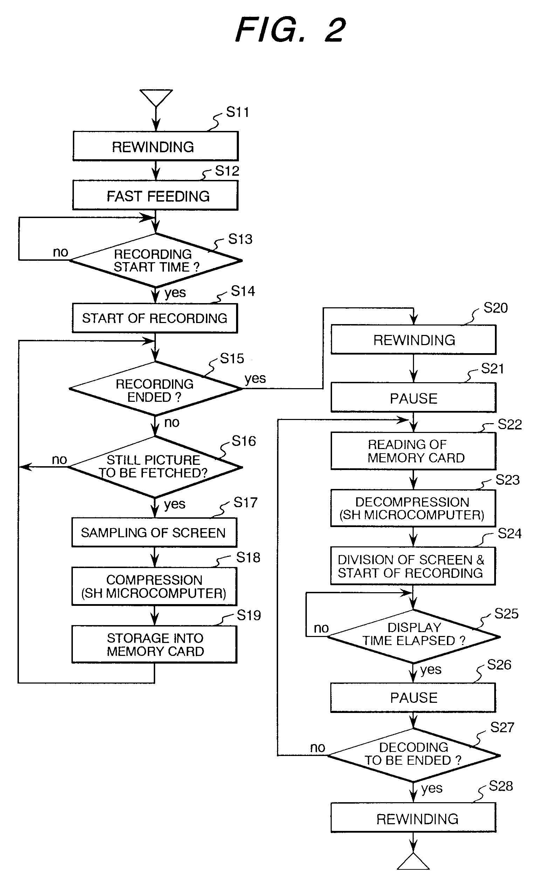

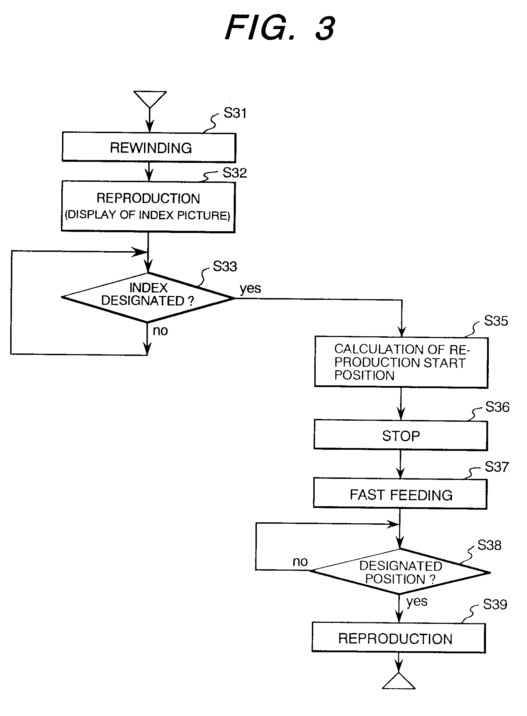

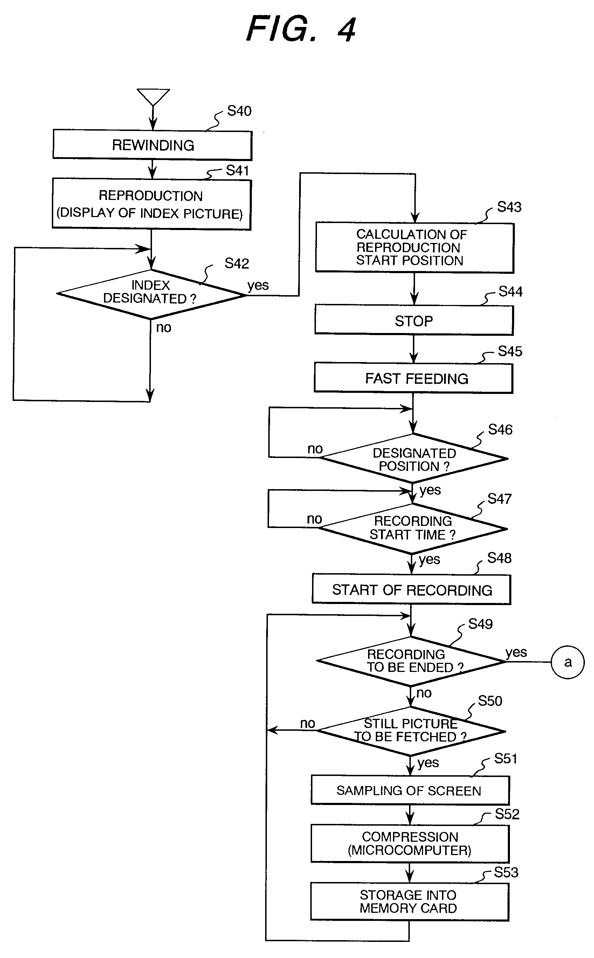

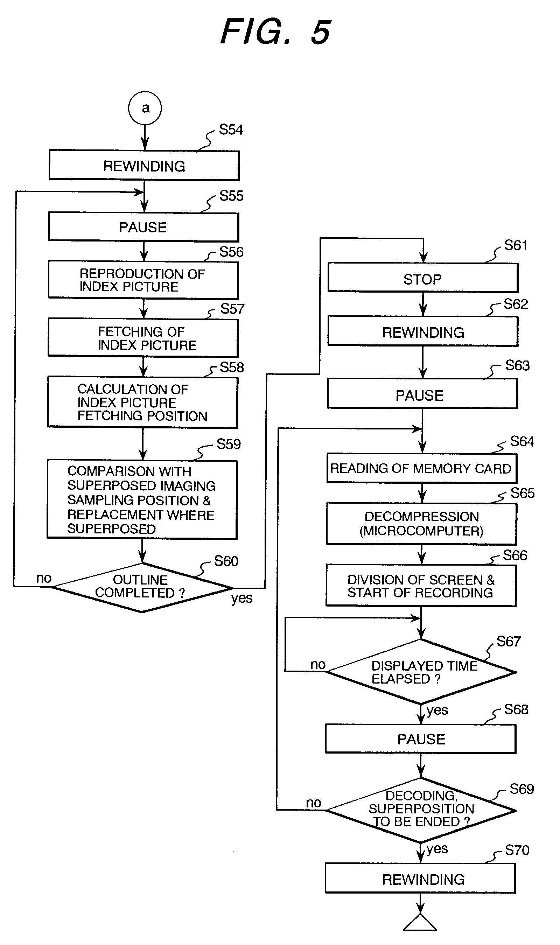

FIG. 2 is a flow chart of production processing of a tape of an index picture, FIG. 3 is a flow chart of reproduction processing of the tape of the index picture, and FIGS. 4 and 5 are flow charts of superposition imaging processing of the tape of the index pictures. FIG. 6 is a schematic view showing an example of index pictures, and FIGS. 7, 8 and 9 are schematic views illustrating a relationship between the processing of the flow charts of FIGS. 2, 3, 4 and 5 and information recorded on the tape.

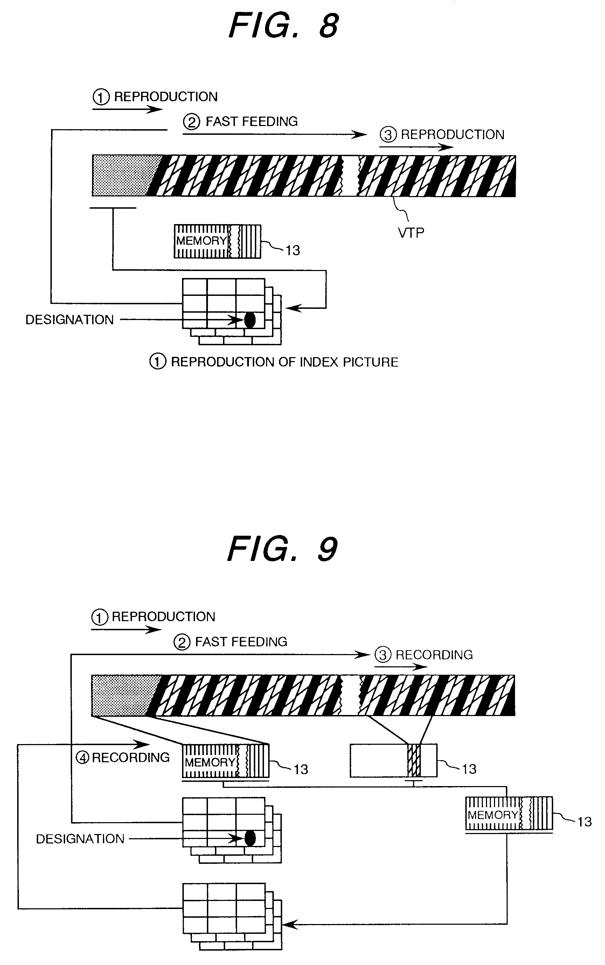

First, recording of new pictures will be described. FIG. 7 is a view schematically illustrating an outline of the processing of FIG. 2. Thus, the processing will be described with reference to the flow chart shown in FIG. 2.
(1) First at step S11, in response to a rewinding request signal sent to the VTR microcomputer 16a, rewinding of a tape is performed by the control of the VTR microcomputer 16a. The rewinding operation at step S11 is performed only when required. Then, in response to a manual operation of a recording operation switch on a panel switch 51, the switches 30 and 31 are switched to the ② side in accordance with an instruction from the VTR microcomputer 16a, and the video tape VTP is fed fast from the BOT (Beginning Of Tape) at step S12 so that, for example, a dark picture is inputted to the video tap recorder from the analog to digital converter 20 under the control of the index picture producing microcomputer 16b until the fed length of the video tape detected by a counter 52 becomes equal to a desired length to assure, at a top portion of the video tape, an index area IDX into which index pictures are to be recorded. In the present embodiment, in the case of recording using a two-hour tape, if an index picture is produced by sampling after each 30 seconds, then the number of index pictures obtained is 120 x 2 = 240. When the 240 index pictures are displayed in the form of a nine-divided screen, 240/9 = 26.6 ≒ 27 screens are required. If each one screen is displayed for approximately 3 seconds which allow visual observation of the picture by eyesight, then the tape VTP is fed fast by a length corresponding to 27 x 3 = 81 seconds to secure the index area IDX into which the index pictures are to be recorded.
(2) Then at step S13, the VTR stands by until recording is started, and after the recording start time on the index picture producing microcomputer 16b comes and the discrimination at step S13 changes to yes, the switches 30 and 31 are switched to the ① side in response to an instruction from the VTR microcomputer 16a. Then at step S14, recording of a video information signal 41 obtained from the tuner 11c into a video information signal recording area of the video tape VTP following the index area IDX is started. Then, the mode of the VTR is changed over to a recording mode in which the video information signal 41 obtained from the tuner 11c is to be recorded into the video information signal recording area of the video tape VTP.
(3) If recording is not ended at step S15 and a still picture is to be fetched at step S16, then in parallel to a recording operation, a video information signal to be used as an index picture is fetched (taken out) as a still picture from within the video information signal 41 being recorded by the index picture production section 3 into the frame memory 18 after each fixed interval of time (for example, 30 seconds) (step S17). Then, the video information signal is compression coded in accordance with the JPEG system by the index picture producing microcomputer 16b (step S18) and stored into the memory card 13 (step S19). Then, the mode of the VTR is changed over to an index recording mode in which predetermined ones of screens to be recorded by the index picture production section 3 are to be extracted and stored into the memory card (picture memory) 13.
(4) If recording is performed until the last end EOT of the video tape VTP comes or recording comes to an end at step S15 in response to a manual operation of the remote controller 15 or the like, then rewinding is performed at step S20. Then at step S21, the VTR is put into a pause-recording condition, and the switches 30 and 31 are changed over to the ② side in response to an instruction from the VTR microcomputer 16a to establish an index recording mode in which, in response to a manual operation of the recording operation switch, contents of the memory card 13 are recorded into the index area IDX secured on the video tape VTP. In particular, at step S22, contents of the memory card 13 are read, and at steps S23 and S24, the contents thus read are decompressed and decoded by the index picture producing microcomputer 16b so that they are edited into a divided display index picture signal of, for example, the 3x3 matrix display system (for example, a nine-divided display on the screen of the monitor 21 as shown in FIG. 6) by which, upon ordinary reproduction, screens can be displayed, for each screen, for a period of time of several seconds (approximately 3 seconds) within which one screen can be visually observed by eyesight. Then, the divided display index picture signal 43 is inputted to the VTR so that it is recorded into the index area IDX secured on the video tape VTP.
   At step S25, the VTR waits until a predetermined time elapses (in the present embodiment, approximately 3 seconds). Then at step S26, it is discriminated whether or not decoding editing processing for a predetermined number of divided display index screens has been completed, and if the decoding editing processing has not been completed, then the control sequence advances to step S22. On the contrary if the decoding editing processing has been completed, then the video tape VTP is rewound at step S28, thereby ending the processing.
   Even if the video tape with divided display index pictures completed in such a manner as described above is set in position into an ordinary video tape recorder and reproduced in an ordinary reproduction mode, contents of video information recorded on the video tape set in position can be searched visually observing divided display index pictures displayed on the TV screen as seen in FIG. 6, and as a result, video information desired to be reproduced can be retrieved readily. In other words, this is a significant advantage of the present invention.
   Subsequently, description will be given of reproduction processing by the video tape recorder of the present invention of the video tape VTP on which the divided display index pictures completed in such a manner as described above are recorded. FIG. 8 is a schematic view of the reproduction processing. In particular, the reproduction processing will be described with reference to FIG. 3.
(5) The video tape VTP is set in position into the video tape recorder of the present invention, and at step S31, the tape VTP on which the divided display index screens are recorded are rewound to index the divided display index pictures. At step S32, the divided display index pictures recorded at the top portion of the video tape VTP are reproduced at an ordinary reproduction speed. Consequently, on the screen of the television, index screens, for example, of the 3x3 matrix display type are successively displayed at time intervals of approximately 3 seconds like A, B, C, ... Accordingly, contents recorded on the video tap VTP can be retrieved readily.
(6) At step S33, the video tape recorder waits until a divided display index picture is designated. If a divided display index picture desired to be reproduced appears on the screen of the television and designated, then the control sequence advances to step S35, at which the position of the designated index picture on the video tape when the designated index picture was sampled is calculated from the number of the index picture obtained from the index picture producing microcomputer 16b and the sampling interval of the video information by the VTR microcomputer 16a. At steps S36 and S37, the reproduction is stopped, and feeding to the reproduction designation position is started. At step S38, feeding to the calculated position is ended. In other words, if an index picture desired to be reproduced appears on the screen of the television and is designated by means of the remote controller 15 or the like, the reproduction position of the video tape VTP is moved to the position at which sampling of the index picture has been performed.
(7) Thereafter, reproduction of the video information desired to be reproduced is performed. In particular, reproduction is started at step S39 and can be started from the predetermined video information.

The mode described above is the reproduction mode.

Subsequently, a superposed imaging mode according to the present invention will be described.

FIG. 9 is a schematic view illustrating processing in the superposed imaging mode. In particular, the processing in the superposed imaging mode will be described with reference to the flow charts of FIGS. 4 and 5.
(1) Divided display index pictures recorded at the top portion of a video tape VTP set in position in the VTR 2 are reproduced. Then, an index picture desired to be imaged for superposition is designated. In particular, at step S40, the video tape VTP set in position in the VTR 2 is rewound, and at step S41, reproduction is started and a divided display index picture signal 42 obtained from the construction section 2 is displayed on the monitor 21. At step S42, the index picture representing the start position of superposed imaging is inputted, for example, by means of the remote controller 15 or the like.
(2) Then, the video tape VTP is fed to the position at which the designated index picture is to be fetched. In particular, after an index picture representing a start position for superposition is designated at step S42, the VTR microcomputer 16a calculates, at step S43, a recording start position based on a signal obtained from the counter 52, and the video tape VTP is fed to the calculated position at steps S44, S45 and S46. At step S47, the video tape recorder waits starting of recording.
(3) While superposed imaging recording of a video information signal from the tuner 11c or the external apparatus 11e is performed in accordance with the recording mode described in (2) above, index pictures sampled at fixed intervals of time (for example, 30 seconds) are compressed and coded in accordance with the JPEG system by the index picture producing microcomputer 16b and fetched into the memory card (picture memory) 13. In particular, at step S48, recording is started. At step S49, ending of recording is discriminated, and when recording is ended, the control sequence advances to step S54. At step S50, it is discriminated whether or not it is a timing at which a still picture is to be fetched, and if a still picture is not to be fetched, then the control sequence returns to step S49. At step S51, the video information signal is converted from an analog to a digital signal by the digital to analog converter 19 and sampled and stored into the frame memory 17. At step S52, the video information in the frame memory 17 is compressed and coded in accordance with the JPEG system, and the compressed coded video information is stored into the memory card 13 at step S53.
(4) Then, the video tape VTP is rewound, and the divided display index pictures for a 3x3 divided display recorded already at the top portion of the video tape VTP are readout. The divided display index pictures are compressed and coded without thinning out picture elements by the index picture producing microcomputer 16b and fetched as they are onto the memory card 13. When the index pictures are read out from the memory card 13 by the index picture producing microcomputer 16b, the superposed imaging compressed coded index picture is decompressed and divisionally edited to form a superposed imaging divided display index picture by the index picture producing microcomputer 16b. Then, the superposed imaging divided display index picture which overlaps on the time base with a recorded divided display index picture is replaced and outputted from the digital to analog converter 19 so that the divided display index picture is recorded into the index area IDX at the top portion of the video tape VTP.

In particular, after recording of superposed imaging onto the video tape VTP is completed, the video tape VTP is rewound at step S54, and at steps S55 and S56, the divided display index pictures recorded precedently are reproduced. At step S57, the reproduced divided display index pictures are fetched into the frame memory 17. The index picture producing microcomputer 16b stores the divided display index pictures as they are in a time series into the memory card 13. At step S58, the index picture producing microcomputer 16b calculates a fetching position of the recorded divided display index pictures. At step S59, the index picture producing microcomputer 16b compares the fetching position of the recorded divided display index picture and the fetching position of the superposed imaging index picture sampled upon superposed imaging with each other, and when they overlap with each other, the superposed imaging index picture is replaced with the recorded divided display index picture. At step S60, it is discriminated whether or not reproduction of the entire index area recorded precedently is completed. If the reproduction is completed, then the control sequence advances to step S61, but when the reproduction is not completed, the control sequence returns to step S55.

At next steps S61 and S62, the video tape VTP is rewound. At step S63, the video tape recorder is put into a pause-recording condition. At step S64, the index picture producing microcomputer 16b reads out contents of the memory card 13. At step S65, the index picture producing microcomputer 16b performs decompression decoding processing and dividing editing processing only for the superposed imaging index picture read out from the memory card 13 to form a superposed imaging divided display index picture. At step S66, the index picture producing microcomputer 16b superposes the superposed imaging divided display index picture with the recorded divided display index pictures read out from the memory card 13 to form such a divided display index picture as shown in FIG. 6 and inputs the thus formed divided display index picture to the construction section 2 through the digital to analog converter 19 to start recording of it into the index area INX at the top portion of the video tape VTP. At step S67, the one divided display index picture is recorded for a fixed period of time (approximately 3 seconds). At step S68, the decoding processing and superposition for one divided display index picture by the index picture producing microcomputer 16b is completed. If the decoding processing and superposition (repetition of recording of one divided display index picture for a fixed period of time (approximately 3 seconds) by a predetermined number) is not completed at step S69, the control sequence returns to step S64. On the contrary, if the recording of a predetermined number of divided display index pictures into the index area INX at the top portion of the video tape VTP is completed by the decoding processing and superposition of the contents of the memory card 13, the control sequence advances to step S70, at which the tape VTP is rewound, thereby completing the processing.

As described above, according to the present embodiment, if a video tape with divided display index pictures completed is reproduced in an ordinary reproduction mode by a video information recording and reproduction apparatus irrespective of the type, then divided display index pictures recorded in the index area at a top portion of the video tape can be displayed graspably on a television, and as a result, contents of information recorded on the video tape can be grasped intuitively by eyesight.

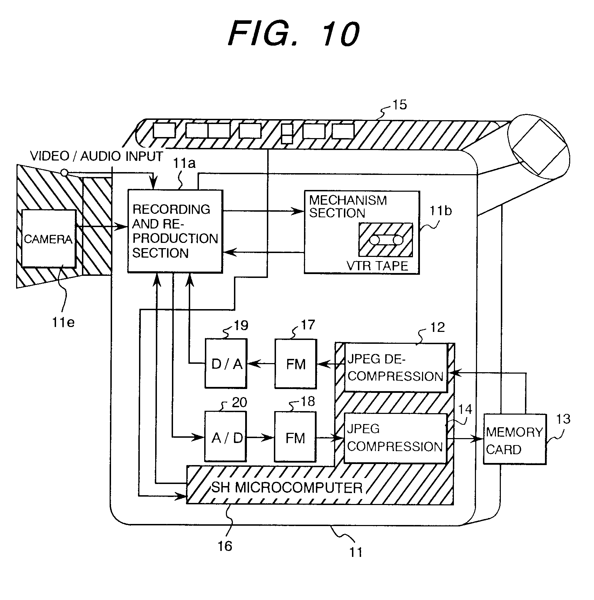

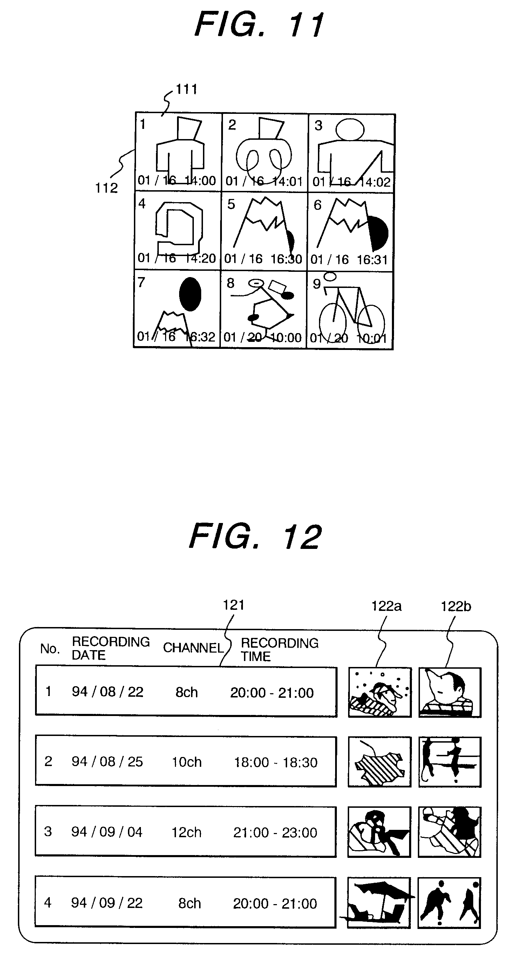

FIG. 10 shows an embodiment wherein the present invention is applied to a video camera (video tape recorder with a camera). As seen from FIG. 10, the present invention can be applied to the video camera by changing the input from the tuner 11c in FIG. 2 to an input from an external apparatus 11e. Index pictures in this instance are displayed, taking photographing into consideration as a condition, such that, as seen in FIG. 11, the date and time 112 of photographing is superimposed on each of index pictures 111 so as to improve the convenience in use.

Further, in the embodiment described above, a large number of index pictures extracted along a time series are successively displayed as pluralities of divided display index pictures on a television (display means) so that contents of the recorded video tape may be grasped intuitively by eyesight.

Meanwhile, some video tape recorders help editing and arrangement of a video tape by recording, on the video tape, a recording date, a channel, a recording time and so forth to be displayed. However, only from such information, contents of the video tape can not be recalled readily as they pass the remembrance of the user.

Therefore, in an applied embodiment of the present invention, the index picture producing microcomputer 16b obtains, upon recording, from the VTR microcomputer 16a and stores into the memory card 13 recording setting conditions such as a recording date, channel, time and so forth for each recording operation (the recording date and time can be obtained from the VTR microcomputer 16a in response to a signal outputted from, for example, a timer 53, and the channel can be obtained from the VTR microcomputer 16a in response to a signal outputted from, for example, the remote controller 15 or the external apparatus 11e). Further, similarly as in the production and storage of index pictures described hereinabove in connection with the first embodiment, the index picture production section 3 extracts recording video information for a small number of pictures at suitable time intervals (1 to 5 minutes) after starting of recording and compresses, codes and stores the recording video information into the memory card 13. Then, the index picture producing microcomputer 16b produces a pair of reduced index pictures 122a and 122b and records them into the index area IDX secured at a top portion of the video tape VTP in addition to a recording setting condition 121 so that, after completion of recording, the recording video information read out from the memory card 13 may be distinguished as seen from FIG. 12. Such index pictures as shown in FIG. 12 can be displayed on a television (display means) in a video information reduction apparatus (any video information reproduction apparatus having at least a reproduction function) of whichever type the video tape on which such index information is recorded is reproduced in an ordinary reproduction mode. As a result, contents of the recorded picture information recorded on the video tape can be grasped intuitively by eyesight.

When index information is recorded into the index area IDX secured at a top portion of the video tape VTP, if the index picture producing microcomputer 16b obtains a recording start address (obtained from the VTR microcomputer 16a) on the video tape corresponding to data of the item number No. of each of the recording setting conditions 121 and records the recording start address on a control track or an audio track, then if the video thus produced is set in position into a video information reproduction apparatus and reproduced in an ordinary reproduction mode so that it is displayed on a television, the video tape can be fed to the recording start position of desired video information to start reproduction only by designating the item number of the corresponding one of the recording setting conditions 121 by means of a mouse or the like.

While, in the embodiment described above, index pictures are produced by sampling video information upon recording by the index picture production section 3, video information when a video tape recorded already is reproduced may be sampled to produce index pictures similarly as upon superposed imaging.

While the embodiment described above relates to a video information recording and reproduction apparatus (video tape recorder), since a video tape with divided display index pictures is prepared, also a video tape recorder for exclusive use for reproduction can apparently be used for reproduction retrieval processing of the video tape.

While, in the embodiment described above, a memory card is used as temporary storage means for compressed pictures, another storage medium such as a RAM, an EEPROM, a magnetic disk or the like may be used instead.

Further, while, in the embodiment described above, the position of a designated index picture on the video tape when the designated index picture was sampled is calculated, at step S35 illustrated in FIG. 3, by the VTR microcomputer 16a from the number of the index picture obtained from the index picture producing microcomputer 16b and the sampling interval (for example, 30 seconds) of the video information, a marker code may be recorded at the sampling position by the VISS function provided in the VTR so that the video tape may be fed to the reproduction designation position based on recognition of the thus recorded marker code. Or, upon recording of an index picture, the address of the video tape upon sampling may be recorded into a blanking area of the video tape.

Further, while, in the embodiment described above, the recording time of a divided display index picture into the index area of the video tape is described to be 3 seconds per one divided display index picture, the recording time may be an arbitrary time within the range from approximately one second to approximately five seconds.

Further, while, in the embodiment described above, divided display index pictures recorded in the index area of the video tape can be displayed, upon reproduction, in a nine-divided picture screen, they may otherwise be displayed in a 16-divided picture screen or a four-divided picture screen.

Further, while, in the embodiment described above, the sampling interval for video information is 30 seconds, it is not limited to the specific time and may be a desired interval such as 10 seconds or one minute. Further, while the sampling interval in the embodiment described above is a fixed time, sampling may be performed at arbitrary timings depending upon a start or an end of recording of video pictures, a change in scene, an input signal from the outside or the like.

Further, while, in the embodiment described above, a software codec provided in a high performance microcomputer is used as the picture compression means, the picture compression means is not limited to the specific software codec, and a digital signal processor (DSP) or an LSI for exclusive use may be used for the picture compression means.

Further, while, in the embodiment described above, the JPEG is utilized as the picture compression method, the picture compression method is not limited to the JPEG, and any other suitable method (to thin out picture elements or to reduce the number of picture elements, while full colors are represented by the data amount of 24 bits per one picture element, if the data are reduced to data of 256 colors represented by 8 bits, then the data amount can be compressed to one third) may be employed instead.

Further, while, in the embodiment described above, no data is recorded onto an audio track upon recording of an index picture, the recording system is not limited to this, and audio information upon sampling, information useful for retrieval of a tape (a tape length, a recording mode, a tape ID, or a recording date) or the like may be recorded onto an audio track.

Further, while, in the embodiment described above, video information is recorded in an analog fashion on a video tape, the present invention can naturally be applied to recording of video information in a digital fashion.

As described above, according to the present invention, since divided display index pictures obtained by extracting contents recorded on a video tape along a time series are recorded as a video information signal at a top portion of the video tape, the index pictures from which the contents of the tape can be grasped intuitively by eyesight only by reproduction of the divided display index pictures recorded at the top portion of the tape can be displayed, upon reproduction, without the necessity for storage means for storing index pictures for individual video tapes and without depending upon a type of an apparatus used to reproduce the tape. Consequently, according to the present invention, there is an advantage that video information recorded on a video tape can be retrieved readily.

## Claims

1. A video information recording and
reproduction apparatus, characterized in that it comprises
video information recording and reproduction means (2) for recording and reproducing video picture information onto and from a video tape, and
an index picture production section (3) which includes a picture memory (13) for storing compressed index picture information, and a microcomputer (16b) for extracting the video picture information (44) recorded by said video information recording and reproduction means (2) at designated extraction timings, successively compressing, decoding and storing the extracted video picture information into said picture memory (13), successively reading out, decompressing and decoding the compressed index picture information stored in said picture memory (13) to form still pictures and outputting the still pictures, and which supplies the index still picture information (45) successively outputted from said microcomputer (16b) to said video information recording and reproduction means so that the index still picture information may be successively recorded into a top portion of the video tape by said video information recording and reproduction means (2).

2. A video information recording and
reproduction apparatus according to claim 1, characterized in that it further comprises display means (21) for displaying the index still picture information recorded at the top portion of the video tape and reproduced by said video information recording and reproduction means (2).

3. A video information recording and
reproduction apparatus, characterized in that it comprises
video information recording and reproduction means (2) for recording and reproducing video picture information onto and from a video tape, and
an index picture production section (3) which includes storage means (13) for storing compressed index picture information and recording setting conditions, and a microcomputer (16b) for extracting the video picture information (44) recorded by said video information recording and reproduction means at designated extraction timings, successively compressing, decoding and storing the extracted video picture information into said storage means, storing the recording setting conditions obtained from said video information recording and reproduction means into said storage means, successively reading out, decompressing and decoding the compressed index picture information stored in said storage means to form still pictures, adding the recording setting conditions from said storage means to the still pictures and outputting the still pictures together with the recording setting conditions, and which supplies the index still picture information (45) successively outputted from said microcomputer having the recording setting conditions added thereto to said video information recording and reproduction means so that the index still picture information with the recording setting conditions added thereto may be successively recorded into a top portion of the video tape by said video information recording and reproduction means.

4. A video information recording and
reproduction apparatus, characterized in that it comprises
a video tuner (11c) or an external apparatus (11e) for obtaining video picture information,
video information recording and reproduction means (2) for recording and reproducing the video picture information onto and from a video tape, and
an index picture production section (3) which includes a picture memory (13) for storing compressed index picture information, and a microcomputer (16b) for extracting the video picture information inputted thereto at designated extraction timings, successively compressing, decoding and storing the extracted video picture information into said picture memory, successively reading out, decompressing and decoding the compressed index picture information stored in said picture memory to form still pictures and outputting the still pictures, and that
one of the video picture information (41) obtained from said video tuner or said external apparatus and a reproduced video picture information (42) obtained from said video information recording and reproduction means (2) by reproduction is selectively inputted to said index picture production section, and the video picture information (41) obtained from said video tuner (11c) or said external apparatus (11e) and the index still picture information (45) outputted from said index picture production section are inputted to said video information recording and reproduction means so as to be recorded onto the video tape.

5. A video information recording and
reproduction apparatus, characterized in that it comprises
video information recording and reproduction means (2) for recording and reproducing video picture information onto and from a video tape, and
index picture production means (3) which includes storage means (13) for storing compressed index picture information, and a microcomputer (16b) for extracting the video information (44) recorded by said video information recording and reproduction means at designated extraction timings, successively compressing, decoding and storing the extracted video picture information into said storage means, successively reading out the compressed index picture information stored in said storage means, converting the read out compressed index picture information into information of a form wherein a plurality of reduced index screens are arranged per one screen and successively outputting the information obtained by the conversion as still pictures each continuously for a predetermined period of time, and which supplies the plurality of arranged index still pictures (45) outputted successively from said microcomputer each for the predetermined period of time to said video information recording and reproduction means so as to be successively recorded into a top portion of the video tape by said video information recording and reproduction means (2).

6. A video information recording and
reproduction apparatus, characterized in that it comprises
video information recording and reproduction means (2) for recording and reproducing video picture information onto and from a video tape, and
index picture production means (3) which includes storage means (13) for storing compressed index picture information, and a microcomputer (16b) for extracting the video information recorded by said video information recording and reproduction means at designated extraction timings, successively storing the extracted video information into a frame memory (17, 18), successively compressing, decoding and storing the video picture information stored in said frame memory into said storage means, converting the compressed index picture information stored in said storage means into information of a form wherein a plurality of reduced index screens are arranged per one screen and successively storing the information obtained by the conversion as still pictures into said frame memory (17, 18), and which successively outputs the plurality of thus arranged index still pictures (44) stored in said frame memory each for a predetermined period of time to said video information recording and reproduction means (2) so as to be successively recorded into a top portion of the video tape by said video information recording and reproduction means each continuously for the predetermined period of time.

7. A video information recording and
reproduction apparatus, characterized in that it comprises
video information recording and reproduction means (2) for recording and reproducing video picture information onto and from a video tape,
index picture production means (3) which includes storage means (13) for storing compressed index picture information, and a microcomputer (16b) for extracting the video information (44) recorded by said video information recording and reproduction means at designated extraction timings, successively compressing, decoding and storing the extracted video picture information into said storage means, successively reading out the compressed index picture information stored in said storage means, converting the read out compressed index picture information into information of a form wherein a plurality of reduced index screens are arranged per one screen and successively outputting the information obtained by the conversion as still pictures each continuously for a predetermined period of time, and which supplies the plurality of arranged index still pictures (45) outputted successively from said microcomputer each for the predetermined period of time to said video information recording and reproduction means so as to be successively recorded into a top portion of the video tape by said video information recording and reproduction means (2),
display means (21) for individually displaying the plurality of arranged index still pictures recorded at the top portion of the video tape and reproduced by said video information recording and reproduction means, and
control means (16a) for designating a desired one of the plurality of arranged index still pictures displayed on said display means and feeding the video tape to a position at which the video information corresponding to the designated index picture is recorded.

8. A video information recording and
reproduction apparatus, characterized in that it comprises
video information recording and reproduction means (2) for recording and reproducing video picture information onto and from a video tape,
index picture production means (3) which includes storage means (13) for storing compressed index picture information, and a microcomputer (16b) for extracting the video information (44) recorded by said video information recording and reproduction means at designated extraction timings, successively compressing, decoding and storing the extracted video picture information into said storage means, successively reading out the compressed index picture information stored in said storage means, converting the read out compressed index picture information into information of a form wherein a plurality of reduced index screens are arranged per one screen and successively outputting the information obtained by the conversion as still pictures each continuously for a predetermined period of time, and which supplies the plurality of arranged index still pictures (45) outputted successively from said microcomputer each for the predetermined period of time to said video information recording and reproduction means (2) so as to be successively recorded into a top portion of the video tape by said video information recording and reproduction means (2),
display means (21) for individually displaying the plurality of arranged index still pictures recorded at the top portion of the video tape and obtained by reproduction in a recording mode by said video information recording and reproduction means, and
control means (16, 30, 31, 15) for designating a desired one of the plurality of arranged index still pictures obtained by reproduction of the top portion of the video tape in a recording mode and displayed on said display means, feeding the video tape to a position at which the video information corresponding to the designated index picture is recorded to record the new video information onto the video tape and inputting the new video information to said index picture production means.

9. A video information recording and
reproduction apparatus according to claim 8, characterized in that
said control means (16, 30, 31, 15) inputs, to said index picture production means, the plurality of recorded arranged index still pictures recorded at the top portion of the video tape obtained by reproduction by said video information recording and reproduction means (3), and that
said index picture production means (3) forms, in addition to the plurality of recorded arranged index still pictures inputted by said control means, a plurality of arranged index still pictures corresponding to the new video information by said microcomputer.

10. A method of recording index picture information onto a video tape, characterized in that index picture information (45) to be used for retrieving video information recorded on a video tape is recorded, into a top portion of the video tape, as information of a plurality of arranged pictures (as shown in Fig. 6) wherein each screen includes, upon reproduction, a plurality of screens of information sampled in a time series at desired timings from the video information (41) and reduced later.

11. A video tape on which video information is recorded, characterized in that index picture information extracted from the video information is recorded as an index in the same signal form as the video information at a top portion of said video tape.

12. A video tape on which video information is recorded, characterized in that index picture information extracted from the video information is recorded as an index in the same signal form as the video information at a top portion of said video tape, and recording setting conditions of the video information are recorded at the top portion of said video tape.

13. A video tape on which video information is recorded, characterized in that index picture information extracted from the video information is recorded as an index in the same signal form as the video information at a top portion of said video tape, and recording setting conditions of the video information are recorded at a portion of said video tape at which the recording setting conditions do not deteriorate the video information.
